# EUROPEAN PATENT SPECIFICATION

(11) **EP 2 308 286 B1**
(45) Date of publication and mention of the grant of the patent: **11.11.2015**
(21) Application number: 10012553.3
(22) Date of filing: 30.09.2010
(51) Int. Cl.: A01K 39/01

(54) **Adjustable squirrel proof bird feeder**
Anpassbares eichhörnchensicheres Vogelfutterhaus
Mangeoire réglable pour oiseaux résistant aux écureuils

(30) Priority: 09.10.2009 CA 2682022
(43) Date of publication of application: 13.04.2011
(73) Proprietor: PLC Patents and Trademarks Inc., Lac Brome, Quebec J0E 1V0 (CA)
(72) Inventor: Côté, Paul L., Knowlton, QC J0E 1V0 (CA)
(74) Representative: Graf Glück Kritzenberger

(56) References cited:
- EP-A1- 1 723 848
- US-A- 4 646 686
- US-A1- 2002 139 311
- US-B1- 6 253 707

## Description

### FIELD OF THE INVENTION

The present invention relates to bird feeders and more particularly, relates to bird feeders having means to deter the presence of undesired marauders.

### BACKGROUND OF THE INVENTION

Selective bird feeders are known in the art and are designed to limit the maximum size of a bird or animal which can access the seed in the feeder. The reasons for excluding certain birds may be many. Thus, as disclosed in U.S. Patent 3,241,525, there is provided a selective bird feeder which is specific to cardinals. As taught by this patent, a favourite seed of cardinals is the sunflower seed; this seed is also popular with both smaller and larger birds.

Some larger birds will also attempt to access the seed and some such birds including crows, grackles, bluejays and the like are considered by some people to be undesirable.

A further problem associated with bird feeders are marauders which gain access to the seeds. In particular, squirrels are well known for their ability to reach the seed in a bird feeder and to devour the same. Many approaches have been tried to discourage or prevent squirrels from reaching the bird feeder, including various types of covers and baffles on poles. These seldom work as the squirrels have shown great ingenuity in overcoming such devices.

The prior art also teaches other solutions to the problem utilizing shrouds. These may be exemplified by U.S. Patent 4,646,686 to Furlani which teaches a moveable shroud. Other shroud-type squirrel resistant bird feeders are those such as shown in U.S. Patent 6,253,707 and 6,543,384.

### SUMMERY OF THE INVENTION

It is an object of the present invention to provide an adjustably selective bird feeder having a movable shroud to protect and isolate the access openings by which the birds can gain access to the feed in the container while preventing unwanted intruders from accessing the feed.

It is a further object of the present invention to provide a squirrel resistant bird feeder wherein weight over a predetermined amount on either the cover or the perch will cause the shroud to move to a position denying access to the seed in the seed container.

According to one aspect of the present invention there is provided a bird feeder comprising a seed container, a seed tray situated below the seed container and connected thereto, a shroud extending about the seed tray, the shroud having an opening therein to permit access to the seed tray, the shroud having a bottom portion, a perch proximate the opening in the shroud, a center tube mounted internally of the seed container, a non rotatable nut mounted within the center tube proximate an upper end thereof, a rotatable post within the center tube, an upper end of the rotatable post being screwthreadedly engaged with the non rotatable nut, a lower end of the rotatable post extending through the bottom portion of the shroud, stop means on the rotatable post to retain the shroud, a spring within the center tube, the spring extending between the non rotatable nut and the seed tray, a plunger having a portion thereof located within an upper end of the center tube, the plunger contacting an upper end of the post, a rod extending upwardly from a top end of the center tube and a cover about an upper end of the feed container, the cover resting on the plunger.

The bird feeder of the present invention may be formed of any suitable and conventional material and combinations thereof. Thus, many different plastics and metallic materials may be utilized depending upon the desired costs and appearance of the bird feeder.

The seed container of the instant bird feeder will have an open top to permit the dispensing of seed therein to and an open bottom to permit egress of the seed. Preferably, the internal diameter of the seed container at its lower portion is somewhat smaller than the internal diameter of the main body in order to provide a limited and controlled egress of the seeds. The seed container is utilized in conjunction with a seed tray situated below the lower end of the seed container and slightly spaced therefrom such that seed may flow from the seed container to the seed tray.

The seed tray will have a bottom wall and a side wall to retain the seed therein. Preferably, the seed tray has a plurality of apertures therein to permit drainage. Even further, it is preferred that the upper surface of the seed tray have a slightly convex configuration to direct seed from the seed container outwardly to the side wall. The seed tray is preferably connected to the seed container in a spaced relationship thereto.

The seed container also preferably has one or more ribs on an upper outer wall to create a bearing surface with the cover and to create a space to allow the passage of air to and from the seed tube.

The shroud extends about the seed tray and has an opening therein to permit access to the seed tray. When desired, as will be discussed in greater detail hereinbelow, the shroud can move downwardly to block access to the seed tray.

In one preferred embodiment, the shroud is formed of two portions, an upper portion and a lower portion. The two portions are connected by connecting members and the connecting members may extend downwardly past the shroud and then outwardly to form legs to support the bird feeder when on a horizontal surface. The connecting members also serve as bearing surfaces to locate the seed tray in a desired position.

In one preferred embodiment, the perch is a continuous ring which extends 360° around the seed tray.

The seed container includes a hollow center tube which extends from the bottom thereof to up above the top of the seed container. It can be molded as an integral part of the seed container and preferably is connected to the side walls of the seed container by a plurality of ribs.

The hollow tube contains the springs and other components which permits the movement of the shroud. To this end, the center tube preferably has a pair of ribs extending inwardly to retain components in place as will be discussed in greater detail hereinbelow. Also, the center tube preferably has a greater internal diameter at the lower end thereof compared to the internal diameter proximate the upper end thereof.

The bird feeder includes a post which fits within the center tube and has a threaded upper portion which is designed to screw threadably engage a nut. The nut preferably has slots in the sidewalls thereof which engage the inwardly extending ribs whereby the nut is held in a non-rotatable manner. Other means such as shaped nuts and corresponding nut holders may be utilized - i.e. a hex nut in a hexagonal receptacle.

Extending about the post is at least one spring member. In a preferred embodiment, a pair of spring members in an abutting relationship may be utilized with each of the springs having a different spring force. This can permit a more precise calibration of the device.

A plunger is preferably formed of two different components. There is provided an inner plunger which fits within the center post and an outer plunger which has portions thereof external to the center tube. The two plunger portions are connected together by suitable means such as screws or the like.

The arrangement is one wherein the inner plunger provides a bearing surface for the upper end of the post. The outer portion of the plunger is designed to extend about the upper portion of the center tube to prevent seed from gaining access thereto.

For purposes of hanging the bird feeder, preferably there is provided a rod extending upwardly from the top end of the center tube. The rod may be secured to the top of the center tube by any conventional means including a mechanical arrangement and the use of adhesives. The rod has, at its upper end, an aperture therein to receive a hanger.

The bird feeder includes a cover which extends about the top of the seed container. The cover preferably includes an inner vertical wall which contains a plurality of vents therein. The cover is placed such that it rests on top of the plunger and in this position, the top of the seed container is spaced from the cover to permit egress of air through the vents in the inner vertical wall. The seed container, as previously mentioned, also has a plurality of ribs to ensure spacing from the inner vertical wall and thus ensure a passageway for air.

### BRIEF DESCRIPTION OF THE DRAWINGS

Having thus generally described the invention, references will be made to the accompanying drawings illustrating an embodiment thereof, in which:
- Figure 1A: is a perspective view of a bird feeder according to the present invention;
- Figure 1B: is a perspective view of the bird feeder of Figure 1A when the shroud blocks access to the seed tray;

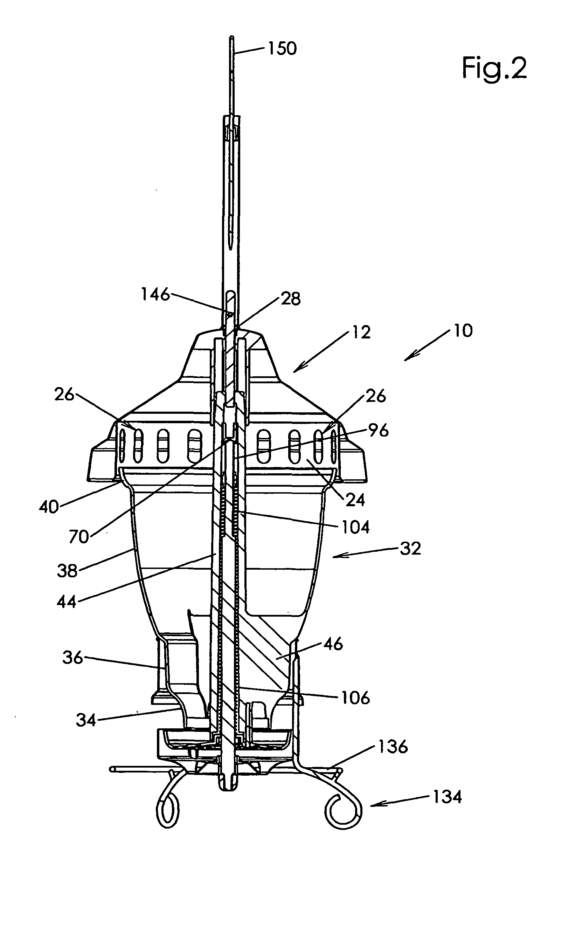

- Figure 2: is a side sectional view thereof;

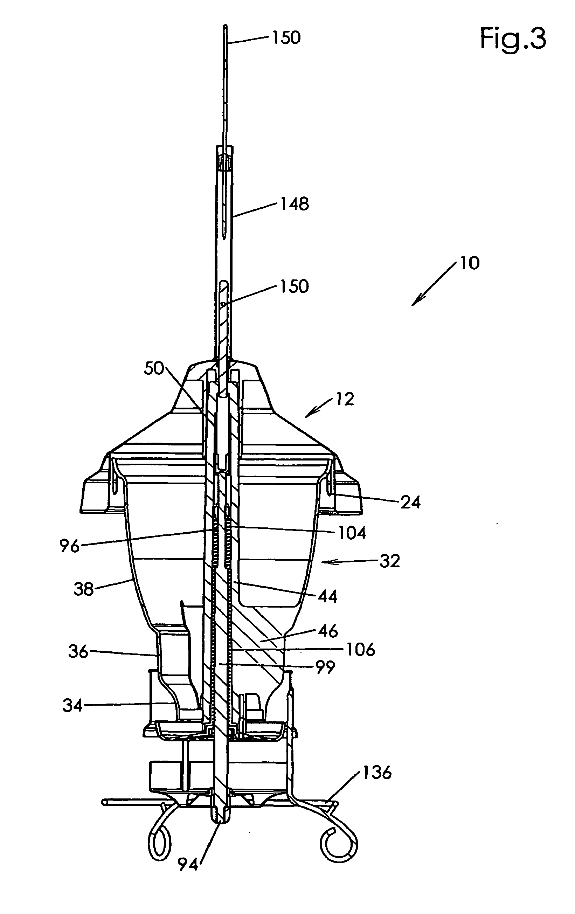

- Figure 3: is a side sectional view similar to Figure 2 wherein the shroud has been lowered to prevent access to the seed tray;

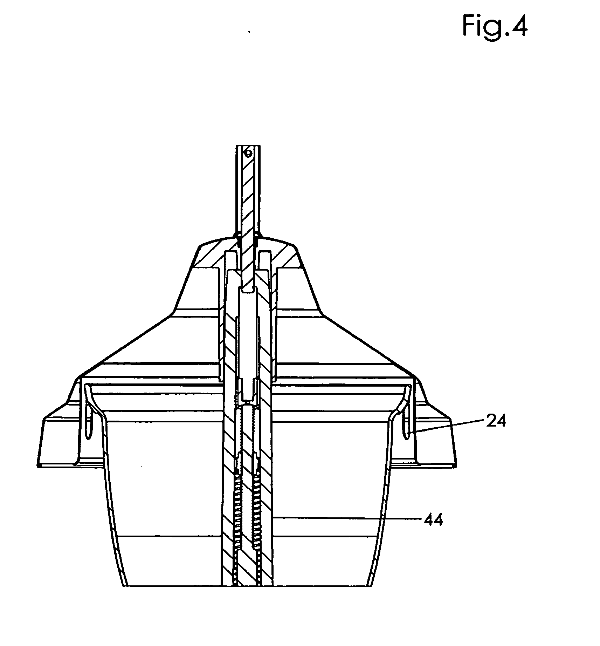

- Figure 4: is a cross sectional view of the upper portion of the bird feeder;

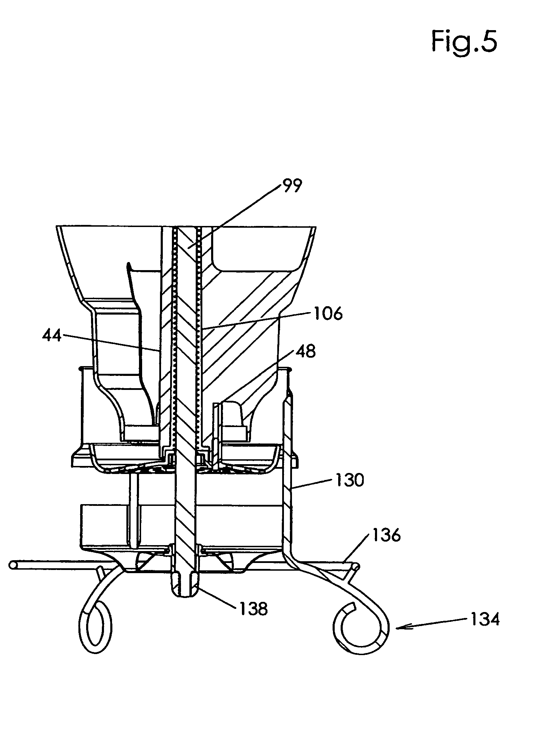

- Figure 5: is a cross sectional view of the lower portion of the bird feeder wherein access to the seed tray is denied;

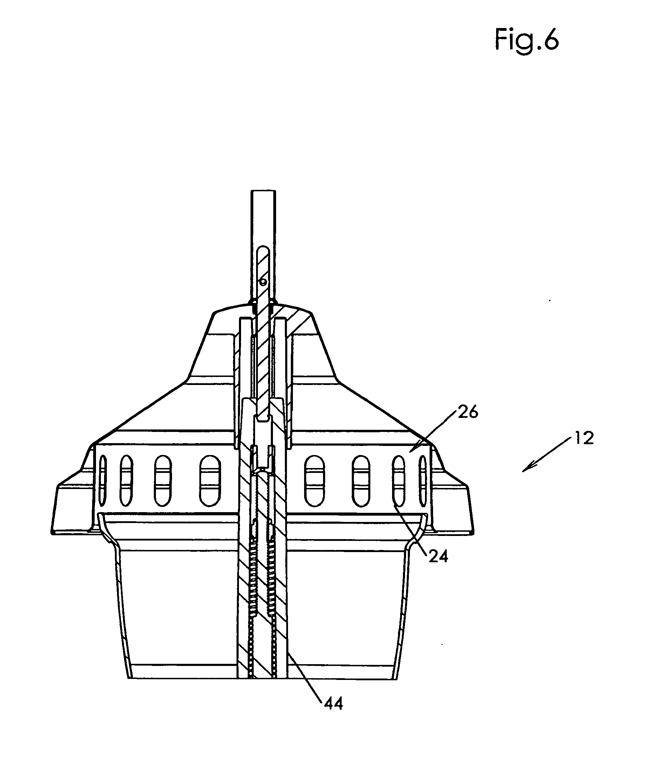

- Figure 6: is a cross sectional view of the cover and associated portions;

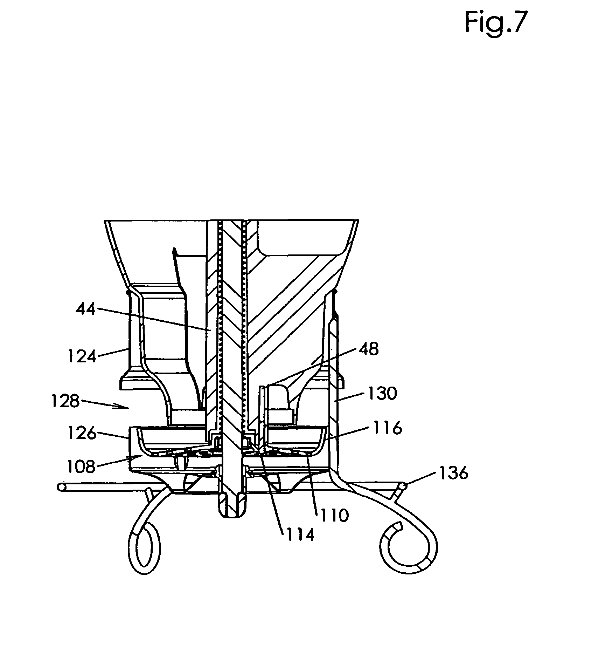

- Figure 7: is a side sectional view of the shroud, a portion being a cut away view;

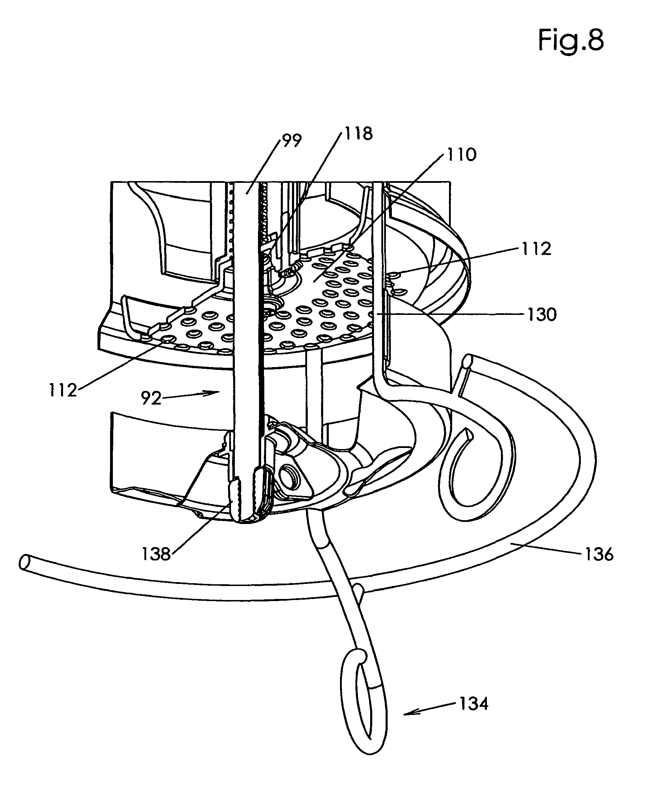

- Figure 8: is a perspective cut away view of the lower portion of the bird feeder;

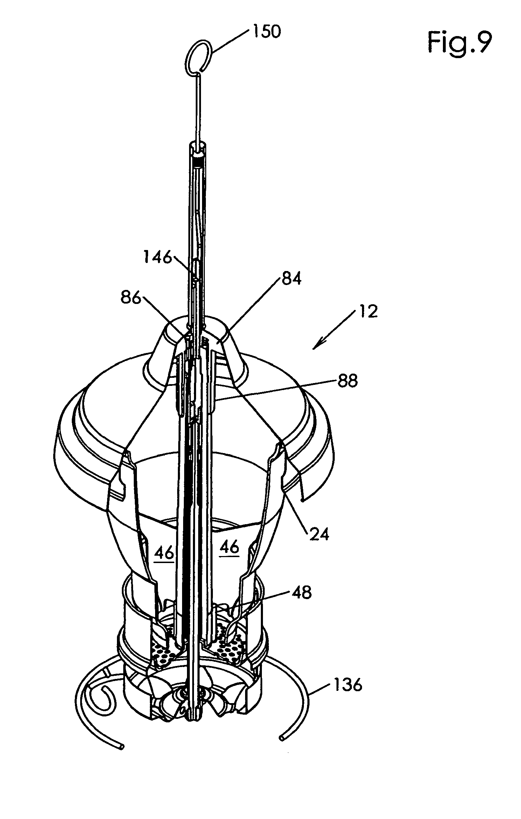

- Figure 9: is a cut away perspective view of the bird feeder;

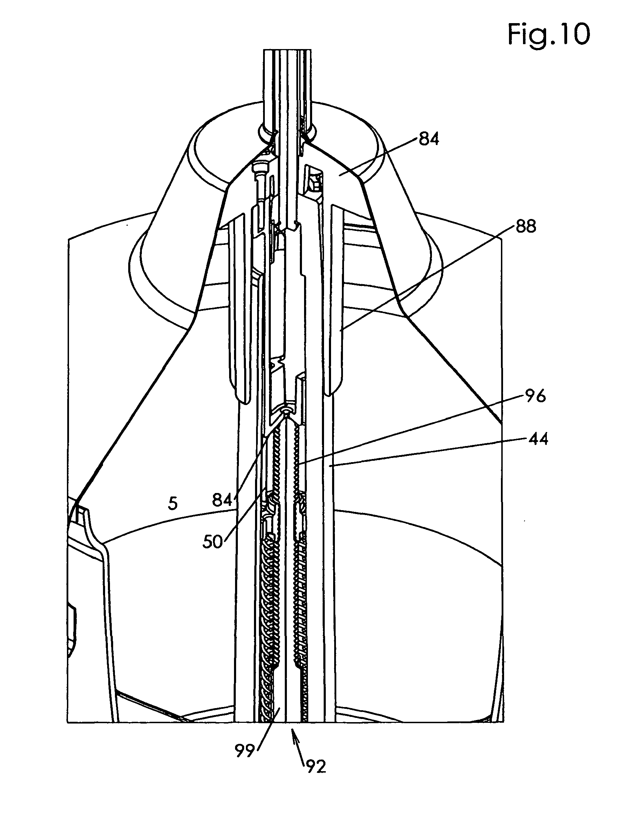

- Figure 10: is a cut away view of the upper portion of the bird feeder;

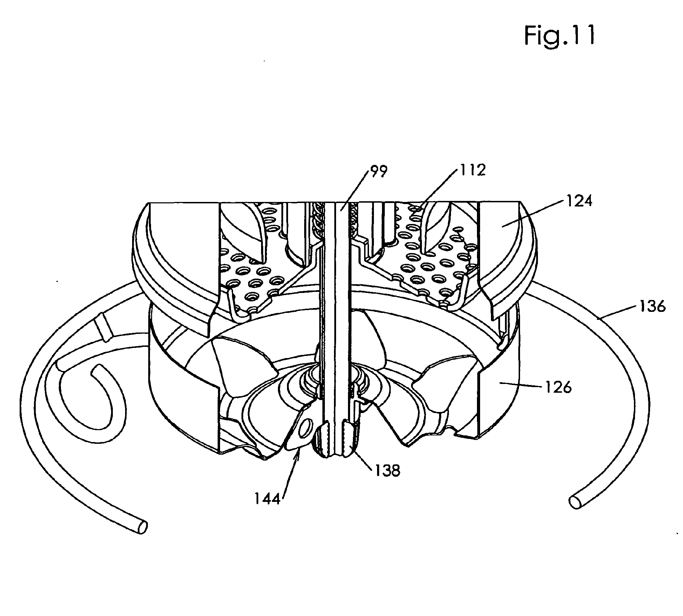

- Figure 11: is a cut away view of the lower portion of the bird feeder;

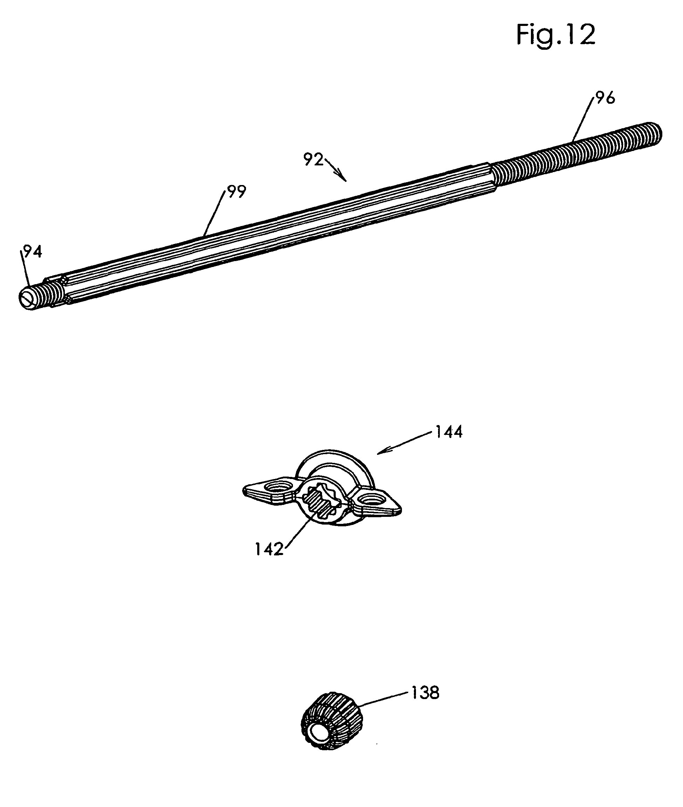

- Figure 12: is an exploded view illustrating the center post and associated components;

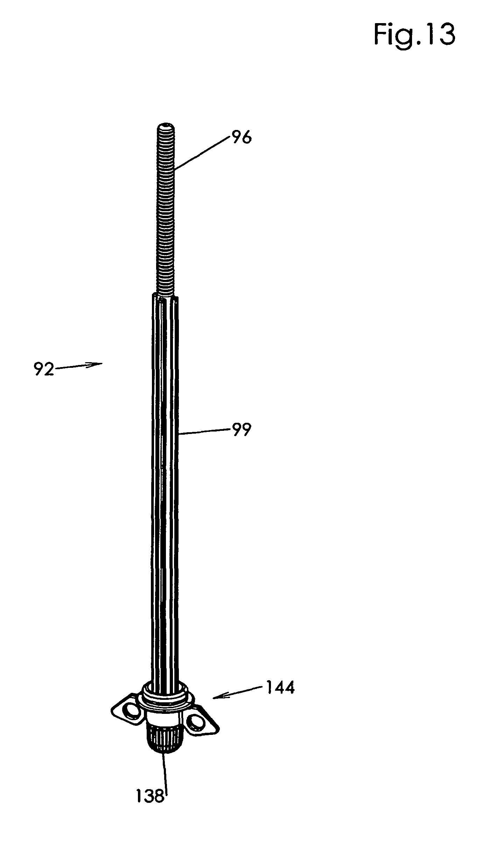

- Figure 13: is a perspective view of the center post and associated components in assembled condition;

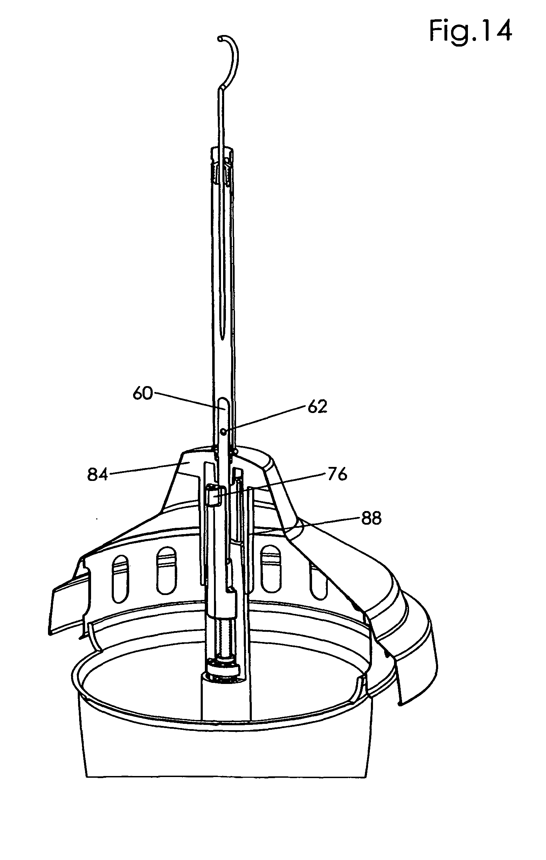

- Figure 14: is a perspective view, in partial cutaway, of the upper portion of the bird feeder;

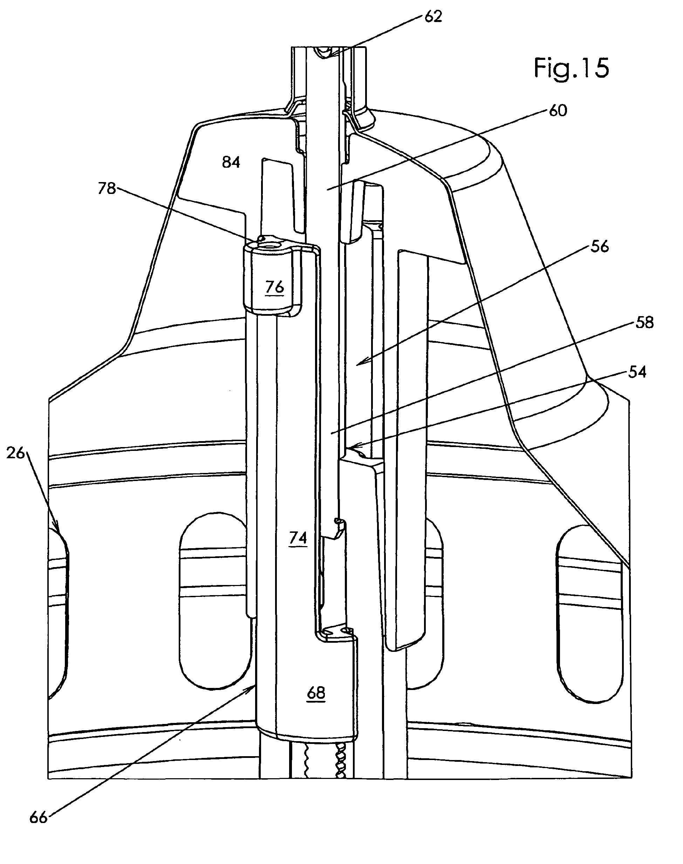

- Figure 15: is a further perspective view, in partial cutaway, of the upper portion of the bird feeder; and

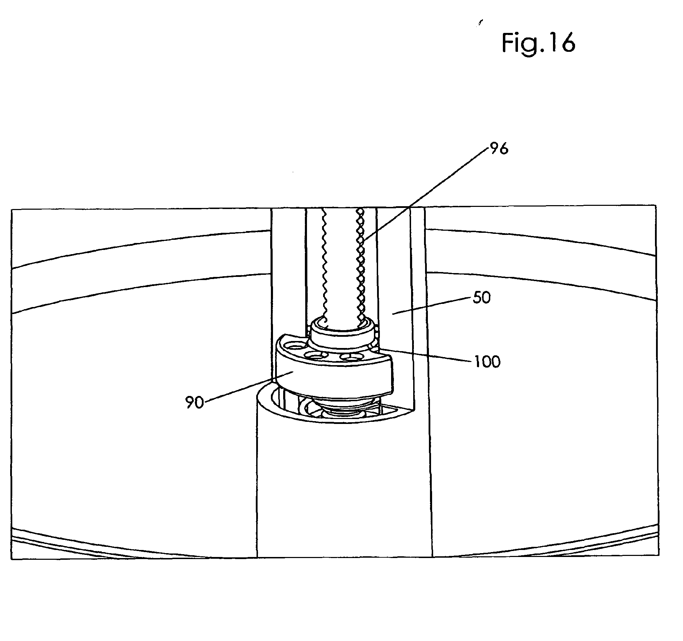

- Figure 16: is a perspective view of the adjustment mechanism for adjusting spring tension.

### DETAILED DESCRIPTION OF THE INVENTION

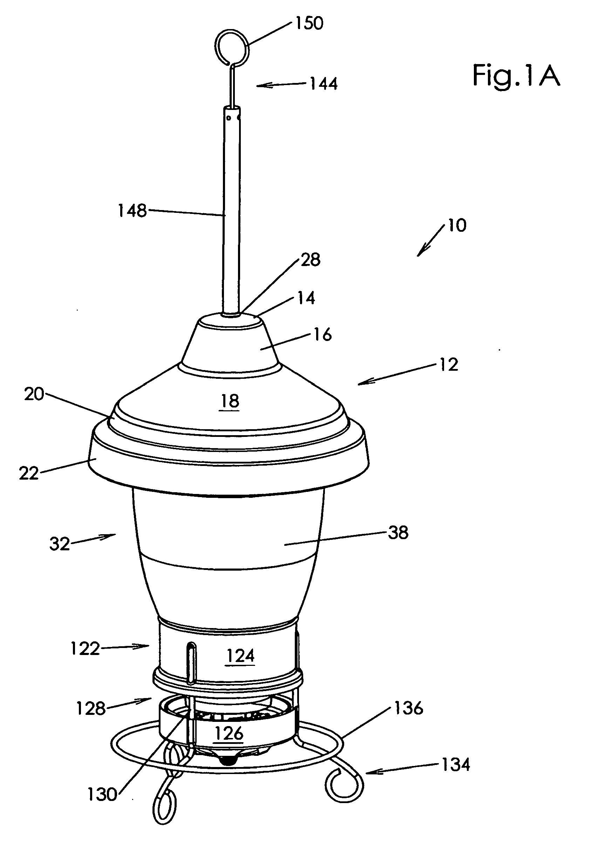

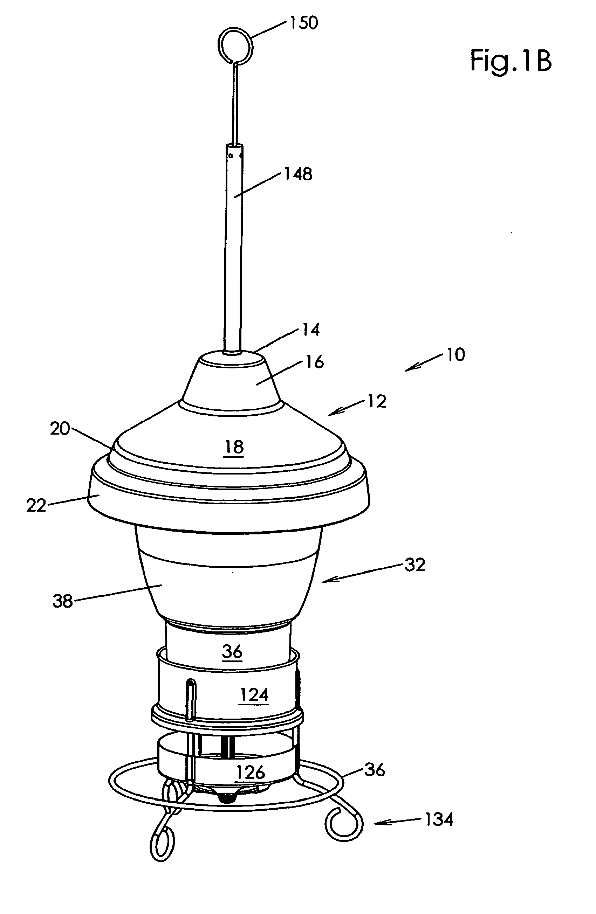

Referring to the drawings in greater detail and by reference characters thereto, there is illustrated in Figure 1 a bird feeder of the squirrel resistant type and which is generally designated by reference numeral 10.

Bird feeder 10 includes a cover generally designated by reference numeral 12 in which cover 12 has a top wall 14, an outwardly tapering upper side wall 16 which merges with a first tapered wall section 18 in turn merges with a smaller second tapered wall section 20. At its lower end, cover 10 terminates in a lower side wall 22.

Interiorly of cover 12, there is provided an inner vertical wall 24 which has a plurality of vents 26 formed therein for allowing the egress of any heated gases from the bird feeder. An aperture 28 is provided in top wall 14 to permit the passage of a hanger.

Bird feeder 10 also includes a seed container generally designated by reference numeral 32. Seed container 32 has a first lower wall section 34 which arcuately merges with a second lower wall section 36. The larger portion of the seed container 32 is defined by an upper wall section 38 which terminates in a top wall section 40 which has external ribs 42 thereon. Top wall section 40 is normally spaced from cover 12.

Seed container 32 also includes an integral inner tube 44 which has connecting ribs 46 extending between inner tube 44 and wall sections 34, 36, and 38. At its lower extremity, inner tube 44 has a plurality of threaded cylinders 48 designed to receive screw members as will be discussed in greater detail hereinbelow.

Internally of inner tube 44 there are provided a pair of inner guide ribs 50. At its upper extremity, inner tube 44 has a pair of slots 52 while on its top wall, an aperture 54 is provided to receive a rod 56. Rod 56 has a lower cylindrical portion 58 which is engaged within aperture 54 and a flat portion 60 having an aperture 62.

A plunger assembly has an inner plunger 66 which in turn has a lower body portion 68 having a concave downwardly facing surface 70. Lower body portion 68 also includes a pair of slots 72 formed in the side walls thereof. A pair of elongated walls 74 extends upwardly with cylindrical portions 76 being provided at the extremity thereof. Cylindrical portions 76 have threaded apertures 78 formed therein; cylindrical portions 76 extend through slots 52.

Also forming a portion of the plunger assembly is outer plunger 82 which has a top portion 84 with apertures 86 formed therein designed to receive screws as will be discussed in greater detail hereinbelow. Outer plunger 82 also has a lower cylindrical portion 88 which is sized to fit about upper end of inner tube 44.

Bird feeder 10 also includes an inner post generally designated by reference numeral 92 and which includes an lower threaded end 94 and an upper threaded end 96. The main body portion includes a ribbed section 99. Engaging with upper threaded end 96 is a threaded nut 90 which has a pair of slots 100 formed on opposite outer side walls thereof. Slots 100 are designed to engage with inner guide ribs 50 to prevent rotation of nut 98.

Mounted about inner rod 92 is an upper spring 104 and a lower spring 106. Springs 104 and 106 are coil springs and in one embodiment, the two springs have a different setting - i.e. they have different spring forces.
Bird feeder 10 also includes a seed tray 108 which has bottom wall 110 which has a plurality of drainage apertures 112 formed therein. Preferably, the upwardly facing side of bottom wall 110 is somewhat convex in configuration. Apart from apertures 112, there are also a plurality of screw receiving apertures 114 formed therein. Seed tray 108 also has a side wall 116 while a central aperture 118 is provided therein to permit the passage of inner rod 92 therethrough.

Bird feeder 10 also includes a shroud generally designated by reference numeral 122 and which shroud 122 includes an upper section 124 and a lower section 126 with an opening 128 therebetween. A plurality of connecting members 130 connect upper section 124 and lower section 126. As aforementioned, an upper portion 132 of rods 130 connect the two sections of the shroud while the remaining lower leg portion 134 forms legs for placing bird feeder 10 on a horizontal surface. A perch 136 in the form of a ring extends around the lower leg portions 138 which provides a roosting place for birds to feed from seed tray 108 through opening 128.

Surrounding the lower portion of inner rod 92 is a wing nut arrangement 144 which has an internal cruciform configuration 142 to receive the ribbed main body 99. The cooperation between ribbed main body 99 and internal cruciform configuration 142 is such as to cause the rotation of inner rod 92 when wing nut 144 is turned. A nut 138 seats on lower threaded end 94 of inner rod 92 to hold shroud 122 in place.

A hanger 144 having a hook 146 at a lower end thereof is designed to engage rod 156. A hanger cover 148 extends about the upper portion of a component 56 while a grasping end 150 is provided at the upper end of hanger 144.

In assembly and operation, inner plunger 66 is placed within inner tube 44 with slots 72 being engaged by inner guide ribs 50. In this respect, preferably inner tube 44 is of a slightly tapered configuration having a greater internal diameter at its lower end compared to its internal diameter at its upper end. Elongated walls 74 of inner plungers 66 have, as previously mentioned, cylindrical portions 76 which will extend outwardly through slots 52. Thus the travel stops of inner plunger 66 are provided by lower body portion 68 engaging an upper wall of inner tube 44 and cylindrical portions 76 engaging the wall defining slots 52.

Outer plunger 82 is attached by means of screws 152 extending through top portion 84 to cylindrical portions 58 of inner plunger 66.

Inner rod 92 is inserted within inner tube 44 with upper threaded end 96 engaging concave surface 70 of inner plunger 66. Engaged with upper threaded end 96 is nut 98 with slots 100 engaging inner guide ribs 50. Upper spring 104 extends about the upper portion of inner rod 92 and abuts concave surface 70 of lower body 68 of inner plunger 66. Lower spring 106 is designed to abut seed tray 108 which is secured to the lower portion of inner tube 44 by means of screws 152 engaging threaded cylinders 48.

It will be understood described embodiment is for purposes of illustration only and that changes and modifications may be made thereto without departing from the scope of the invention, as defined by the appended claims.

## Claims

1. A bird feeder (10) comprising:
a seed container (32);
a seed tray (108) situated below said seed container(32) and connected thereto;
a shroud (122) extending about said seed tray (108), said shroud (122) having an opening (128) therein to permit access to said seed tray (108), said shroud (122) having a bottom portion;
a perch (136) proximate said opening (128) in said shroud (122);
a center tube (44) mounted internally of said seed container (32);
a non rotatable nut (90) mounted within said center (44) tube proximate an upper end thereof;
a rotatable post (92) within said center tube (44), an upper end (96) of said rotatable post (92) being screwthreadedly engaged with said non rotatable nut (90), a lower end (94) of said rotatable post (92) extending through said bottom portion of said shroud (122), stop means on said rotatable post (92) to retain said shroud (122);
a spring (104, 106) within said center tube (44), said spring (104, 106) extending between said non rotatable nut (90) and said seed tray (108);
a plunger (66) having a portion thereof located within an upper end of said center tube (44), said plunger (66) contacting an upper end of said post (92); a rod (56) extending upwardly from a top end of said center tube (44); and
a cover (12) about an upper end of said feed container (32), said cover (12) resting on said plunger (66).

2. The bird feeder of Claim 1 further including an aperture (62) in said rod (56), a hanger (144) having a proximal end and a distal end, said proximal end having a hook-shaped configuration (146).

3. The bird feeder of Claim 1 wherein said cover has an inner vertical wall, said inner vertical wall having vents formed therein, said cover being spaced from the top of said seed container.

4. The bird feeder of Claim 1 wherein said spring (104, 106) within said center tube (44) is comprised of first and second spring portions, said first and second spring portions having different spring forces.

5. The bird feeder of Claim 1 wherein said shroud (122) has an upper portion (124) and lower portion (126), said upper portion (124) and said lower portion (126) being connected by a plurality of connecting members (130).

6. The bird feeder of Claim 5 wherein each of said connecting members (130) extends downwardly to form a leg to support said bird feeder (10) on a horizontal surface.

7. The bird feeder of Claim 5 wherein said perch (136) is a ring extending about said seed tray (108), said perch (136) being connected to said connecting members (130).

8. The bird feeder of Claim 1 wherein said seed tray (108) has a bottom wall (110) and a side wall (116), said bottom wall (110) having a plurality of drainage apertures (112) formed therein, said bottom wall (110) having an upper surface of a convex configuration, an opening in said seed tray (108) for passage of said rotatable post (92).

9. The bird feeder of Claim 1 further including an adjustment member, said adjustment member being secured to a lower portion of said post (92) such that rotation of said adjustment member causes said post (92) to rotate to thereby adjust the spring force.

10. The bird feeder of Claim 9 wherein said adjustment member has a wing nut configuration (144).

11. The bird feeder of Claim 1 wherein said center tube (44) has a transparent portion indicia being located on said transparent portion such that visual access is provided to indicate a position of said non-rotatable nut (90).

12. The bird feeder of Claim 1 wherein said plunger (66) has an inner portion and an outer portion, said inner portion having a body section to abut a top end of said post (92) within said center tube (44), an outer portion being connected to said inner portion, said outer portion having a wall surrounding a top of said center tube (44) to thereby prevent seeds from entering said center tube (44).

13. The bird feeder of Claim 1 wherein a bottom wall of said lower portion (126) of said shroud (122) has a plurality of openings (128) therein to permit stray seeds to pass therethrough.

14. The bird feeder of Claim 1 wherein said center tube (44) has a least one rib (50) formed on an inner wall thereof, said non rotating nut (90) having a slot within a side wall thereof, said rib (50) engaging said slot to thereby prevent rotation of said nut (90).

15. The bird feeder of Claim 1 wherein said stop means comprises a nut (98) screwthreadedly engageable with said rotatable post (92).

## Patentansprüche

1. Vogelfuttervorrichtung (10) umfassend:
einen Kornbehälter (32);
eine unterhalb des Kornbehälters (32) angeordnete und mit diesem verbundene Kornablage (108);
eine sich um die Kornablage (108) erstreckende Verkleidung (122), wobei die Verkleidung (122) eine den Zugang zur Kornablage (108) erlaubende Öffnung (128) aufweist, wobei die Verkleidung (122) einen Bodenabschnitt aufweist;
eine Sitzstange (136) benachbart zu der Öffnung (128) in der Verkleidung (122);
ein innerhalb des Kornbehälters (32) befestigtes mittiges Rohr (44);
eine drehfeste Mutter (90), wobei die drehfeste Mutter (90) in dem mittigen Rohr (44) benachbart zu einem oberem Ende dessen befestigt ist;
einen drehbaren Stab (92) in dem mittigen Rohr (44), wobei ein oberes Ende (96) des drehbaren Stabes (92) mittels eines Schraubgewindes in die drehfeste Mutter (90) eingreift, wobei sich ein unteres Ende (94) des drehbaren Stabes (92) durch den Bodenabschnitt der Verkleidung (122) erstreckt, ein Anschlagelement an dem drehbaren Stab (92) zum Halten der Verkleidung (122);
eine Feder (104, 106) in dem mittigen Rohr (44), wobei sich die Feder (104, 106) zwischen der drehfesten Mutter (90) und der Kornablage (108) erstreckt;
einen Stößel (66) aufweisend einen in einem oberen Ende des mittigen Rohres (44) angeordneten Abschnitt, wobei der Stößel (66) mit einem oberen Ende des Stabes (92) in Kontakt steht;
eine sich von einem obersten Ende des mittigen Rohres (44) nach oben erstreckende Stange (56);
und eine Abdeckung (12) über ein oberes Ende des Kornbehälters (32), wobei die Abdeckung (12) auf dem Stößel (66) aufsitzt.

2. Vogelfuttervorrichtung nach Anspruch 1 zusätzlich aufweisend eine Durchbrechung (62) in der Stange (56), eine Hängevorrichtung (144) mit einem proximalen Ende und einem distalen Ende, wobei das proximale Ende eine hakenförmige Struktur (146) aufweist.

3. Vogelfuttervorrichtung nach Anspruch 1, wobei die Abdeckung eine innere vertikale Wandung aufweist, wobei in der inneren vertikalen Wandung Lüftungsöffnungen ausgebildet sind, wobei die Abdeckung beabstandet zur Oberkante des Kornbehälters angeordnet ist.

4. Vogelfuttervorrichtung nach Anspruch 1, wobei die Feder (104, 106) in dem mittigen Rohr (44) aus ersten und zweiten Federabschnitten gebildet wird, wobei die ersten und zweiten Federabschnitte verschiedene Federspannungen aufweisen.

5. Vogelfuttervorrichtung nach Anspruch 1, wobei die Verkleidung (122) einen oberen Abschnitt (124) und einen unteren Abschnitt (126) aufweist, wobei der obere Abschnitt (124) und der untere Abschnitt (126) über mehrere Verbindungselemente (130) miteinander verbunden sind.

6. Vogelfuttervorrichtung nach Anspruch 5, wobei sich jedes der Verbindungselemente (130) nach unten erstreckt, um einen Fuß zum Abstützen der Vogelfuttervorrichtung (10) auf einer horizontalen Fläche zu bilden.

7. Vogelfuttervorrichtung nach Anspruch 5, wobei die Sitzstange (136) als ein sich um die Kornablage (108) erstreckender Ring ausgebildet ist, wobei die Sitzstange (136) mit den Verbindungselementen (130) verbunden ist.

8. Vogelfuttervorrichtung nach Anspruch 1, wobei die Kornablage (108) eine Bodenwandung (110) und eine Seitenwand (116) aufweist, wobei in der Bodenwandung (110) mehrere Drainageöffnungen (112) ausgebildet sind, wobei die Bodenwandung (110) eine konvex ausgebildete obere Oberfläche aufweist, wobei eine Öffnung in der Kornablage (108) zum Durchführen des drehbaren Stabes (92) vorgesehen ist.

9. Vogelfuttervorrichtung nach Anspruch 1 zusätzlich aufweisend ein Einstellelement, wobei das Einstellelement an einem unteren Abschnitt des Stabes (92) derart befestigt ist, dass eine Drehung des Einstellelementes den Stab (92) in Drehung versetzt um dadurch die Federspannung einzustellen.

10. Vogelfuttervorrichtung nach Anspruch 9, wobei das Einstellelement in Form einer Flügelmutter (144) ausgebildet ist.

11. Vogelfuttervorrichtung nach Anspruch 1, wobei das mittige Rohr (44) einen transparenten Abschnitt aufweist, wobei Markierungen an dem transparenten Abschnitt derart angeordnet sind, dass eine Sichtkontrolle ermöglicht wird, um eine Position der drehfesten Mutter (90) anzuzeigen.

12. Vogelfuttervorrichtung nach Anspruch 1, wobei der Stößel (66) einen inneren Bereich und einen äußeren Bereich aufweist, wobei der innere Bereich einen Körperabschnitt zur Anlage an einem obersten Ende des Stabes (92) in dem mittigen Rohr (44) aufweist, wobei ein äußerer Bereich mit dem inneren Bereich verbunden ist, wobei der äußere Bereich eine den obersten Rand des mittigen Rohres (44) umgebende Wandung aufweist um einen Eintrag von Körnern in das mittige Rohr (44) zu verhindern.

13. Vogelfuttervorrichtung nach Anspruch 1, wobei eine Bodenwandung des unteren Abschnittes (126) der Verkleidung (122) mehrere Öffnungen aufweist, um Streukörnen den Durchtritt dadurch zu erlauben.

14. Vogelfuttervorrichtung nach Anspruch 1, wobei das mittige Rohr (44) zumindest eine auf seiner inneren Wandung ausgebildete Rippe (50) aufweist, wobei die drehfeste Mutter (90) einen Schlitz in ihrer Seitenwand aufweist, und wobei die Rippe (50) in den Schlitz eingreift und dadurch die Drehung der Mutter (90) verhindert.

15. Vogelfuttervorrichtung nach Anspruch 1, wobei das Anschlagelement eine für eine Schraubgewinde-Wirkverbindung mit dem drehbaren Stab (92) ausgebildete Mutter (98) umfasst.

## Revendications

1. Mangeoire pour oiseaux (10) comprenant:
un conteneur à graines (32);
un plateau à graines (108) situé en dessous dudit conteneur à graines (32) tout en étant relié à celui-ci;
un revêtement (122) s'étendant autour dudit plateau à graines (108), ledit revêtement (122) comportant une ouverture (128) permettant d'accéder audit plateau à graines (108), ledit revêtement (122) présentant une partie de fond;
un perchoir (136) à proximité de ladite ouverture (128) dans ledit revêtement (122);
un tube central (44) monté à l'intérieur dudit conteneur à graines (32);
un écrou non-rotatif (90) monté à l'intérieur dudit tube central (44), à proximité d'une extrémité supérieure de celui-ci;
un poteau rotatif (92) à l'intérieur dudit tube central (44), une extrémité supérieure (96) dudit poteau rotatif (92) étant engagée par vissage avec ledit écrou non-rotatif (90), une extrémité inférieure (94) dudit poteau rotatif (92) s'étendant à travers ladite partie de fond dudit revêtement (122), un moyen d'arrêt sur ledit poteau rotatif (92) étant prévu pour retenir ledit revêtement (122);
un ressort (104, 106) à l'intérieur dudit tube central (44), ledit ressort (104, 106) s'étendant entre ledit écrou non-rotatif (90) et ledit plateau à graines (108);
un poussoir (66) comportant une partie située à l'intérieur d'une extrémité supérieure dudit tube central (44), ledit poussoir (66) touchant une extrémité supérieure dudit poteau (92);
une tige (56) s'étendant vers le haut à partir d'une extrémité supérieure dudit tube central (44); et
un couvercle (12) autour d'une extrémité supérieure dudit conteneur à graines (32), ledit couvercle (12) reposant sur ledit poussoir (66).

2. Mangeoire pour oiseaux selon la revendication 1, comprenant en outre une ouverture (62) dans ladite tige (56), une suspension (144) présentant une extrémité proximale et une extrémité distale, ladite extrémité proximale présentant une configuration en forme de crochet (146).

3. Mangeoire pour oiseaux selon la revendication 1, dans laquelle ledit couvercle présente une paroi verticale intérieure, ladite paroi verticale intérieure comportant des évents formés dans celle-ci, ledit couvercle étant espacé du dessus dudit conteneur à graines.

4. Mangeoire pour oiseaux selon la revendication 1, dans laquelle ledit ressort (104, 106) à l'intérieur dudit tube central (44) est constitué d'une première et d'une deuxième partie de ressort, lesdites première et deuxième parties de ressort présentant des forces de ressort différentes.

5. Mangeoire pour oiseaux selon la revendication 1, dans laquelle ledit revêtement (122) comporte une partie supérieure (124) et une partie inférieure (126), ladite partie supérieure (124) et ladite partie inférieure (126) étant reliées par une pluralité d'éléments de liaison (130).

6. Mangeoire pour oiseaux selon la revendication 5, dans laquelle chacun desdits éléments de liaison (130) s'étend vers le bas pour former un pied permettant de supporter ladite mangeoire pour oiseaux (10) sur une surface horizontale.

7. Mangeoire pour oiseaux selon la revendication 5, dans laquelle ledit perchoir (136) est un anneau s'étendant autour dudit plateau à graines (108), ledit perchoir (136) étant relié auxdits éléments de liaison (130).

8. Mangeoire pour oiseaux selon la revendication 1, dans laquelle ledit plateau à graines (108) comporte une paroi de fond (110) et une paroi latérale (116), ladite paroi de fond (110) présentant une pluralité d'orifices de drainage (112) formée dans celle-ci, ladite paroi de fond (110) présentant une surface supérieure avec une configuration convexe, une ouverture étant prévue dans ledit plateau à graines (108) pour le passage dudit poteau rotatif (92).

9. Mangeoire pour oiseaux selon la revendication 1, comprenant en outre un élément de réglage, ledit élément de réglage étant fixé à une partie inférieure dudit poteau (92), de manière à ce que la rotation dudit élément de réglage entraîne la rotation dudit poteau (92) pour ainsi ajuster la force de ressort.

10. Mangeoire pour oiseaux selon la revendication 9, dans laquelle ledit élément de réglage présente une configuration d'écrou ailé (144).

11. Mangeoire pour oiseaux selon la revendication 1, dans laquelle ledit tube central (44) porte un indicateur de partie transparent situé sur ladite partie transparente, de manière à fournir un accès visuel indiquant une position dudit écrou non-rotatif (90).

12. Mangeoire pour oiseaux selon la revendication 1, dans laquelle ledit poussoir (66) comporte une partie intérieure et une partie extérieure, ladite partie intérieure comportant une section de corps destinée à buter contre une extrémité supérieure dudit poteau (92) à l'intérieur dudit tube central (44), une partie extérieure étant reliée à ladite partie intérieure, ladite partie extérieure comportant une paroi entourant une partie supérieure dudit tube central (44) pour ainsi empêcher les graines d'entrer dans ledit tube central (44).

13. Mangeoire pour oiseaux selon la revendication 1, dans laquelle une paroi inférieure de ladite partie inférieure (126) dudit revêtement (122) comporte une pluralité d'ouvertures (128) pour permettre aux graines perdues de passer à travers celle-ci.

14. Mangeoire pour oiseaux selon la revendication 1, dans laquelle ledit tube central (44) comporte au moins une nervure (50) formée sur une paroi intérieure de celui-ci, ledit écrou non-rotatif (90) comportant une fente dans une paroi latérale de celui-ci, ladite nervure (50) s'engageant dans ladite fente pour ainsi empêcher la rotation dudit écrou (90).

15. Mangeoire pour oiseaux selon la revendication 1, dans laquelle ledit moyen d'arrêt comprend un écrou (98) apte à être engagé par vissage avec ledit poteau rotatif (92).
